Europäisches Patentamt

European Patent Office

Office européen des brevets

(11) Publication number: **0 253 609 B1**

# EUROPEAN PATENT SPECIFICATION

(45) Date of publication of patent specification: **01.04.92**   (51) Int. Cl.⁵: **E06B 7/084**, F24F 13/14, B60H 1/34

(21) Application number: **87306176.6**

(22) Date of filing: **13.07.87**

(54) Rotational device for air conditioner flow control.

(30) Priority: **14.07.86 US 885941**

(43) Date of publication of application:
**20.01.88 Bulletin 88/03**

(45) Publication of the grant of the patent:
**01.04.92 Bulletin 92/14**

(84) Designated Contracting States:
**DE ES FR GB IT SE**

(56) References cited:
**DE-A- 3 121 901**
**GB-A- 1 549 177**
**US-A- 3 219 104**
**US-A- 4 345 510**
**US-A- 4 377 107**

(73) Proprietor: **STERLING ENGINEERED PRO-
DUCTS INC.**
**3000 Strayer Road**
**Maumee Ohio 43537(US)**

(72) Inventor: **Parker, Jerome T.**
**4400 Alison Road Michigan Center**
**Michigan 49254(US)**

(74) Representative: **West, Alan Harry et al**
**R.G.C. Jenkins & Co. 26 Caxton Street**
**London SW1H 0RJ(GB)**

## Description

This invention generally relates to a louver assembly for controlling the flow of fluid from a conduit and, more particularly, to a louver outlet assembly for controlling the volume and direction of air discharge from an air conditioning source.

Various types of louver assemblies are utilized for regulating the flow of air in a convection or forced air circulating system. In an automotive air conditioning system, the outlet assemblies generally include louvers which can be selectively rotated to regulate the volume and direction of fluid flow from a conduit. One such type of louver assembly is described in U.S. Patent 4,345,510. Currently, the outlet assemblies are typically formed from plastic material and the moveable elements are mounted on shafts which rotate in a bearing. Since the shaft and bearing are both made of plastic material, some form of detent system must be utilized to maintain the rotatable parts in a selected one of various positions. One form of detent system involves a fixed series of ribs or ratchet teeth engaged by a projection formed on the rotatable element. In another form, felt material backed with a pressure sensitive adhesive is applied to the shaft to provide a frictional engagement with the bearing surface.

The problem with detent systems is that they are noisy, difficult to operate smoothly, and are prone to breakage. The problem with the felt material is that it is sensitive to moisture and normal wearing such that it varies in size becoming too tight or too loose to operate properly.

The present invention concerns a rotational device which overcomes the problems of previous devices for use in a rotatable louver assembly for automotive air conditioning systems.

According to the invention there is now provided an automotive air conditioning system having a conduit for containing conditioned air and an aperture formed in a wall of the conduit for releasing the conditioned air from the conduit, the system including a control device for regulating the amount and direction of air released through the aperture, the control device comprising:

a housing defining an opening and adapted to be installed in the aperture in the conduit wall, the housing having at least one wall with a bearing aperture formed therein; and

a louver assembly rotatably mounted in the opening housing and including a control shaft extending generally coaxially within the bearing aperture;

the device being characterised by an O-ring mounted on the control shaft and frictionally engaging a wall of the bearing aperture whereby the louver assembly can be selectively positioned by rotation of the control shaft in the bearing aperture to control the amount and direction of air flow through the opening defined by the housing.

In its preferred form, the louver structure includes projecting shafts which are inserted into bearing apertures in the walls of a surrounding housing. An O-ring formed of rubber or a similar material is mounted on each shaft and is sized to provide a frictional fit with the bearing surface thereby providing smooth rotation operation and maintenance in any selected one of a plurality of rotation positions with respect to the housing. The bearing housing is formed with resilient tabs as part of the walls of the housing to enable the louver assembly to be snap-fitted into the housing.

The invention will now be described in greater detail by way of example only with reference to the accompanying drawings:

Fig. 1 is an exploded perspective view of an automotive air conditioning louver assembly and housing according to the invention;

Fig. 2 is a top plan view taken as if in cross-section of the louver assembly and housing of Fig. 1 in assembled form; and

Fig. 3 is an end elevational view of the louver assembly and housing of Fig. 1 in assembled form.

Referring now to the drawings, an air conditioning outlet housing 10 is mounted in an aperture formed in a surface such as the dashboard 11 of an automobile. The aperture is an opening in the wall of a conduit (not shown) for conditioned fluid from an air conditioning unit. The housing 10 defines a generally rectangular opening having upper and lower walls 12 and 13 respectively connected to end walls 14 and 15. A flange 6 is formed about the front edges of the walls 12, 13, 14 and 15 and extends outwardly from the opening formed by the walls in a plane generally perpendicular to the planes of the walls. Typically, an inner surface 17 of the flange 16 can be fastened to an outer surface 18 of the dashboard 11 by any suitable means (not shown) such as fasteners or adhesives. In the alternative, fastening means (not shown) can be utilized to attach any one or more of the walls 12, 13, 14 and 15 to the dashboard 11 on an inwardly facing surface 19 thereof.

The wall 14 has a pair of slots 20 formed therein extending from the rear edge of the wall 14 opposite the front edge to which the flange 16 is attached toward, but not in contact with, the flange 16. The slots 20 are formed parallel to one another and extend on opposite sides of an outwardly extending circular wall 21 defining the edge of an aperture formed in the wall 14. The portion of the wall 14 between the slots 20 is a tab 22 which includes the wall 21. The walls 12, 13, 14 and 15 are typically formed of a plastic material such that the tab 22 is somewhat resilient and can be forced out of the plane of the wall 14 by bending at a forward end of the tab 22 extending between the forward ends of the slots 20. A similar tab (not shown) can be formed in the wall 15.

A louver assembly 23 is rotatably mounted in the housing 10. The louver assembly 23 is similar to the housing 10 in that it is formed of an upper wall 24 and a generally parallel lower wall 25 connected to a pair of generally parallel end walls 26 and 27. The louver assembly includes a plurality of generally vertically extending fins 28 attached to and extending between an inwardly facing surface of the upper wall 24 and an inwardly facing surface of the lower wall 25. The fins 28 are approximately equally spaced and generally parallel to the end walls 26 and 27. The outwardly facing surfaces of the upper wall 24 and the lower wall 25 are convex from the front edge to the rear edge thereof in order to clear the inwardly facing surfaces of the upper wall 12 and the lower wall 13 of the housing 10 as the louver assembly 23 is rotated as will be discussed below.

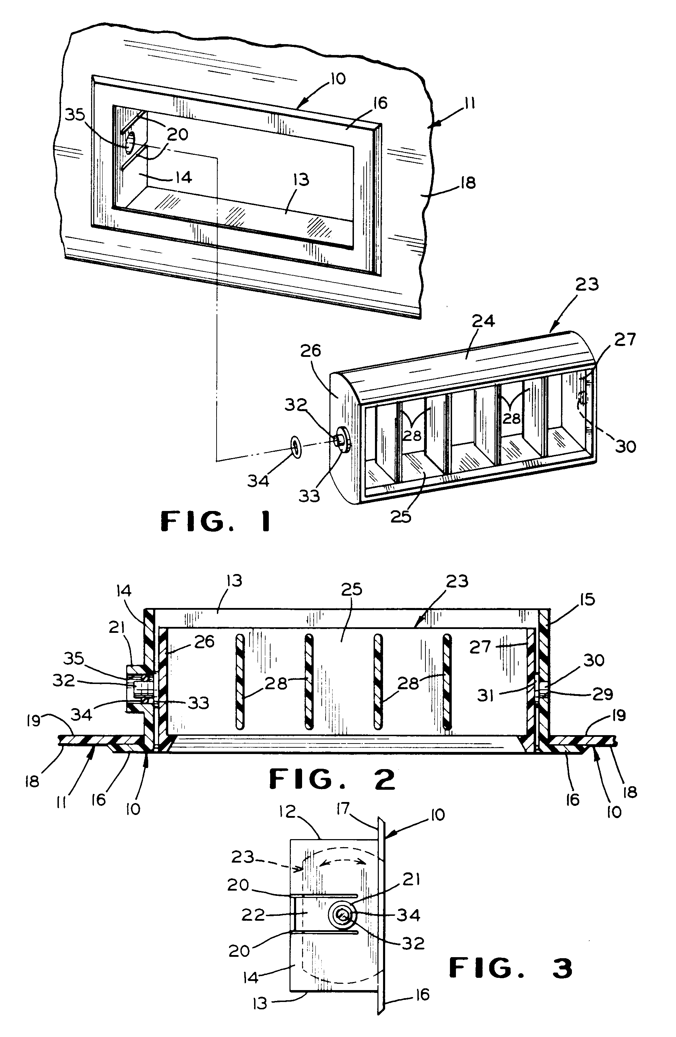

As shown in Fig. 2, the wall 15 of the housing has an aperture 29 formed therein for receiving a mounting shaft or spindle 30 formed on an outer surface of the end wall 27 of the louver assembly. The aperture and the shaft are generally circular in cross-section such that the side walls of the aperture 29 function as a bearing surface for the shaft 30. A circular step 31 is formed at the base of the shaft 30 and is of a larger diameter than the aperture 29 so as to space the end wall 27 of the louver assembly 23 from the end wall 15 of the housing 10.

A control shaft or spindle 32 is formed on the outer surface of the end wall 26 of the lower assembly and extends into the aperture defined by the circular wall 21. A circular step 33 is formed at the base of the shaft 32 and is of a larger diameter than the aperture formed by the wall 21 to space the end wall 26 of the louver assembly 23 from the end wall 14 of the housing 10. An O-ring 34 is installed on the shaft 32 and frictionally engages an inner surface 35 of the wall 21. The shaft 31, the O-ring 34 and the aperture defined by the wall 21 are dimensioned such that there is sufficient frictional engagement to allow the shaft 32 to rotate yet maintain the louver assembly 23 in any selected position of rotation with respect to the housing 10. The O-ring 34 is typically made from rubber, but can be formed of any suitable material which is dimensional stable in the environment of an automotive air conditioning system.

Thus, the present invention concerns a control device for controlling the amount and direction of fluid released through the aperture in the dashboard 11. The housing 10 includes a bearing aperture defined by the wall 21. A louver assembly 23 includes a shaft 32 extending generally coaxially with the bearing aperture. An O-ring 34 is mounted on the shaft 32 and frictionally engages a wall 35 of the bearing aperture to permit selective positioning of the louver assembly in the housing.

## Claims

1. An automotive air conditioning system having a conduit for containing conditioned air and an aperture formed in a wall of the conduit for releasing the conditioned air from the conduit, the system including a control device for regulating the amount and direction of air released through the aperture, the control device comprising:

   a housing (10) defining an opening and adapted to be installed in the aperture in the conduit wall, the housing having at least one wall (14) with a bearing aperture formed therein; and

   a louver assembly (23) rotatably mounted in the opening housing (10) and including a control shaft extending generally coaxially within the bearing aperture (29);

   the device being characterised by an O-ring (34) mounted on the control shaft, (32) in frictional engagement with a wall (35) of the bearing aperture (29) effective to resist rotation of the control shaft whereby the louver assembly can be selectively positioned by rotation of the control shaft (32) and the O-ring (34) together in the bearing aperture (29) to control the amount and direction of air flow through the opening defined by the housing.

2. An automotive air conditioning system according to claim 1, wherein the housing (10) includes a second wall (15) extending generally parallel to the one wall (14) and having a bearing aperture (29) formed therein, and wherein the louver assembly (23) includes a mounting shaft (30) extending generally coaxially within the bearing aperture (29) in the second wall (15).

3. An automotive air conditioning system according to claim 2, wherein the control and mounting shafts (32,30) are each attached to a corresponding wall (26,27) of the louver assembly (23), each shaft (32,30) having a step (33,31) formed on the end attached to the corresponding wall (26,27), the steps being of larger diameter than the bearing apertures (29) and engaging the one wall (14) and the second wall (15) of the housing (10) to space the walls (26,27) of the louver assembly (23) therefrom.

4. An automotive air conditioning system according to any one of claims 1 to 3, wherein the housing (10) has a generally outwardly extending flange (16) formed thereon about the opening for cooperating with a wall (18) of a conduit.

5. An automotive air conditioning system according to any one of claims 1 to 4, wherein one wall (14) has a pair of generally parallel slots (20) formed therein one on each side of the bearing aperture (29).

6. An automotive air conditioning system according to any one of claims 1 to 5, wherein the housing (10) includes a generally annular wall (21) extending form an exterior surface about the bearing aperture (29), the annular wall (21) having an inwardly facing surface for frictionally engaging the O-ring (34).

7. An automotive air conditioning system according to any one of claims 1 to 6, wherein the O-ring (34) is of rubber.

**Revendications**

1. Système de climatisation d'air pour automobile ayant une canalisation destinée à contenir de l'air conditionné et un orifice formé dans une paroi de la canalisation pour libérer l'air conditionné de la canalisation, le système comportant un dispositif de commande pour réguler la quantité et la direction de l'air libéré par l'orifice, le dispositif de commande comprenant

un boîtier (10) définissant une ouverture et adapté à être installé dans la paroi de la canalisation, le boîtier ayant au moins une paroi (14) dans laquelle est formé un orifice de support; et

un assemblage de volet d'aération (23) monté de façon pivotante dans le boîtier de l'ouverture (10) et comportant un arbre de commande disposé globalement coaxialement à l'intérieur de l'orifice de support (29);

le dispositif étant caractérisé par un joint taurique (34) monté sur l'arbre de commande (32) et s'engageant par frottement sur une paroi (35) de l'orifice de support (29) de façon à résister à la rotation de l'arbre de commande, de telle sorte que l'assemblage de volet d'aération puisse être positionné sélectivement par rotation de l'arbre de commande (32) et du joint taurique (34) ensemble dans l'orifice de support (29) afin de commander la quantité et la direction de l'air s'écoulant par l'ouverture définie par le boîtier.

2. Système de climatisation d'air pour automobile selon la revendication 1, dans lequel le boîtier (10) comporte une seconde paroi (15) disposée globalement parallèlement à la paroi (14) et ayant un orifice de support (29) formé dans celle-ci, et dans lequel l'assemblage de volet d'aération (23) comporte un arbre de montage (30) disposé globalement coaxialement à l'intérieur de l'orifice de support (29) dans la seconde paroi (15).

3. Système de climatisation d'air pour automobile selon la revendication 2, dans lequel les arbres de commande et de montage (32, 30) sont chacun fixés à une paroi correspondante (26, 27) de l'assemblage de volet d'aération (23), chaque arbre (32, 30) ayant un gradin (33,31) formé sur l'extrémité fixée à la paroi correspondante (26, 27), les gradins étant d'un diamètre supérieur à celui des orifices de support (29) et s'engageant sur la paroi (14) et la seconde paroi (15) du boîtier (10) pour espacer les parois (26, 27) de l'assemblage de volet d'aération (23).

4. Système de climatisation d'air pour automobile selon l'une quelconque des revendications 1 à 3, dans lequel le boîtier (10) présente une bride se prolongeant globalement vers l'extérieur (16), formée sur celui-ci autour de l'ouverture pour coopérer avec une paroi (18) d'une canalisation.

5. Système de climatisation d'air pour automobile selon l'une quelconque des revendications 1 à 4, dans lequel une paroi (14) présente une paire d'encoches globalement parallèles (20) formées dans celle-ci à raison d'une sur chaque côté de l'orifice de support (29).

6. Système de climatisation d'air pour automobile selon l'une quelconque des revendications 1 à 5, dans lequel le boîtier (10) comporte une paroi globalement annulaire (21) partant d'une surface extérieure entourant l'orifice de support (29), la paroi annulaire (21) ayant une surface orientée vers l'intérieur pour s'engager par frottement sur le joint taurique (34).

7. Système de climatisation d'air pour automobile selon l'une quelconque des revendications 1 à 6, dans lequel le joint taurique (34) est constitué de caoutchouc.

**Patentansprüche**

1. Kraftfahrzeug-Klimaanlage mit einer Leitung für konditionierte Luft und einem in einem Leitungsrand gebildeten Durchlaß zum Abströmen der konditionierten Luft aus der Leitung, wobei die Anlage eine Steuervorrichtung zum Regulieren der Menge und Richtung der durch den Durchlaß strömenden Luft aufweist, wobei die Steuervorrichtung aufweist:

ein Gehäuse (10), das eine Öffnung bildet und in den Durchlaß der Leitungswand einsetzbar ist, wobei das Gehäuse mindestens eine Wand (14) mit einer darin gebildeten Lagerbohrung besitzt, und

eine Schlitzklappenanordnung (23), die in dem Gehäuse (10) drehbar gelagert ist und eine Steuerwelle aufweist, die praktisch koaxial innerhalb der Lagerbohrung (29) verläuft; wobei die Vorrichtung dadurch gekennzeichnet ist, daß ein O-Ring (34) auf der Steuerwelle (32) in Reibanlage mit einer Wand (35) der Lagerbohrung (29) angebracht ist, um einer Drehung der Steuerwelle entgegenzuwirken, wodurch die Schlitzklappenanordnung durch Drehen der Steuerwelle (32) und des O-Rings (34) gemeinsam in der Lagerbohrung (29) wahlweise positionierbar ist, um die Menge und Richtung des Luftstroms durch die von dem Gehäuse gebildete Öffnung zu steuern.

2. Kraftfahrzeug-Klimaanlage nach Anspruch 1, bei der das Gehäuse (10) eine zweite Wand (15) aufweist, die praktisch parallel zu der einen Wand (14) verläuft und in der eine Lagerbohrung (23) gebildet ist, und bei der die Schlitzklappenanordnung (23) eine Lagerwelle (30) aufweist, die praktisch koaxial innerhalb der Lagerbohrung (29) der zweiten Wand (15) verläuft.

3. Kraftfahrzeug-Klimaanlage nach Anspruch 2, bei der die Steuer- und Lagerwelle (32, 30) jeweils an einer entsprechenden Wand (26, 27) der Schlitzklappenanordnung (23) befestigt sind, wobei jede Welle (32, 30) einen Absatz (33, 31) besitzt, der an dem an der entsprechenden Wand (26, 27) befestigten Ende gebildet ist, wobei die Absätze einen größeren Durchmesser als die Lagerbohrungen (29) haben und an der einen Wand (14) sowie der zweiten Wand (15) des Gehäuses anliegen, um die Wände (26, 27) der Schlitzklappenanordnung (23) zu dieser auf Abstand zu halten.

4. Kraftfahrzeug-Klimaanlage nach einem der Ansprüche 1 bis 3, bei dem das Gehäuse (10) einen nach außen ragenden Flansch (16) besitzt, der um die Öffnung herum verläuft, um mit einer Wand (18) einer Leitung zusammenzuwirken.

5. Kraftfahrzeug-Klimaanlage nach einem der Ansprüche 1 bis 4, bei der in einer Wand (14) zwei im wesentlichen parallele Schlitze (20) gebildet sind, und zwar einer auf jeder Seite der Lagerbohrung (29).

6. Kraftfahrzeug-Klimaanlage nach einem der Ansprüche 1 bis 5, bei der das Gehäuse (10) eine Ringwand (21) besitzt, die von einer Außenfläche aus um die Lagerbohrung (29) herum verläuft, wobei die Ringwand (21) eine einwärts gerichtete Fläche zur Reibanlage an dem O-Ring (34) besitzt.

7. Kraftfahrzeug-Klimaanlage nach einem der Ansprüche 1 bis 6, bei der der O-Ring (34) aus Gummmi besteht.

FIG. 1

FIG. 2

FIG. 3